(19) **Europäisches Patentamt / European Patent Office / Office européen des brevets**

(11) **EP 3 033 843 B1**

(12) **FASCICULE DE BREVET EUROPEEN**

(45) Date de publication et mention
de la délivrance du brevet:
**25.12.2019 Bulletin 2019/52**

(21) Numéro de dépôt: **14752811.1**

(22) Date de dépôt: **11.08.2014**

(51) Int Cl.:
*H02S 50/00* [(2014.01)]    *H02S 40/32* [(2014.01)]
*G05F 1/67* [(2006.01)]    *H04B 10/00* [(2013.01)]

(86) Numéro de dépôt international:
**PCT/EP2014/067141**

(87) Numéro de publication internationale:
**WO 2015/022281 (19.02.2015 Gazette 2015/07)**

(54) **PROCEDE ET DISPOSITIF POUR LA REGULATION DE L'ALIMENTATION D'UN CONVERTISSEUR PHOTOVOLTAIQUE**

VERFAHREN UND VORRICHTUNG ZUR REGELUNG DER STROMVERSORGUNG EINES PHOTOVOLTAISCHEN WANDLERS

METHOD AND DEVICE FOR REGULATING THE POWER SUPPLY OF A PHOTOVOLTAIC CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.08.2013 FR 1357975**

(43) Date de publication de la demande:
**22.06.2016 Bulletin 2016/25**

(73) Titulaire: **General Electric Technology GmbH
5400 Baden (CH)**

(72) Inventeur: **DUPRAZ, Jean-Pierre
F-01360 Bressolles (FR)**

(74) Mandataire: **Brevalex
95, rue d'Amsterdam
75378 Paris Cedex 8 (FR)**

(56) Documents cités:
**US-A1- 2009 016 715    US-B1- 7 359 647**

**Description**

**DOMAINE TECHNIQUE ET ART ANTÉRIEUR**

L'invention concerne un procédé et un dispositif pour la régulation de l'alimentation d'un convertisseur photovoltaïque.

Un convertisseur photovoltaïque (CPV) comporte par exemple plusieurs photodiodes AsGa en série, l'ensemble ayant un haut rendement, par exemple de l'ordre de 0,4 à 0,5.

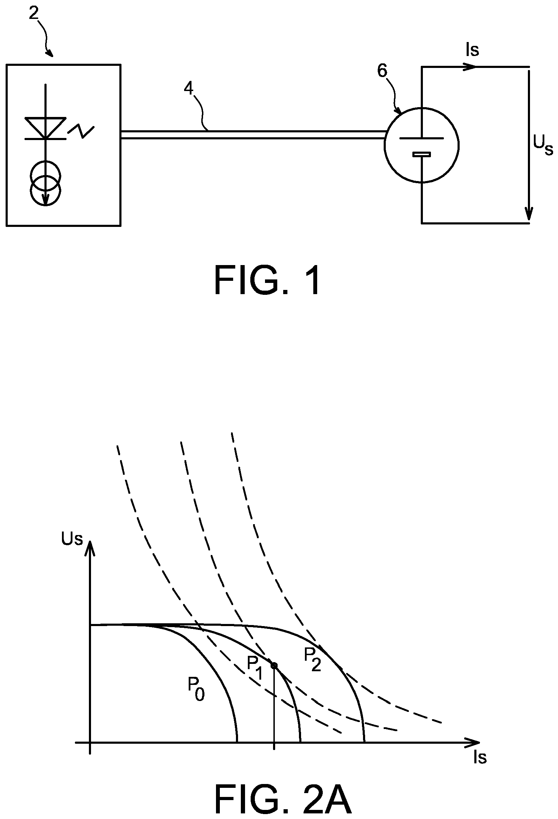

La figure 1 représente schématiquement une source laser (un laser semi-conducteur) 2 qui envoie un rayonnement dans une fibre 4. Ce rayonnement permet d'activer un convertisseur photovoltaïque 6 disposé à l'autre extrémité de la fibre 4. Ce convertisseur délivre un courant Is sous une tension Us.

La figure 2A représente le diagramme Us-Is du convertisseur, chaque courbe correspondant à une puissance optique d'entrée donnée. L'ordonnée à l'origine (Is=0, Us=$U_{s0}$) est la tension de fonctionnement, à vide, du CPV. On a représenté, sur ce diagramme, 3 courbes de fonctionnement, chacune donnant l'évolution de la tension en fonction du courant, pour une puissance optique d'entrée respective P0, P1, P2 (P0<P1<P2). On a également représenté, en traits interrompus, des courbes d'équation Us.Is = constante.

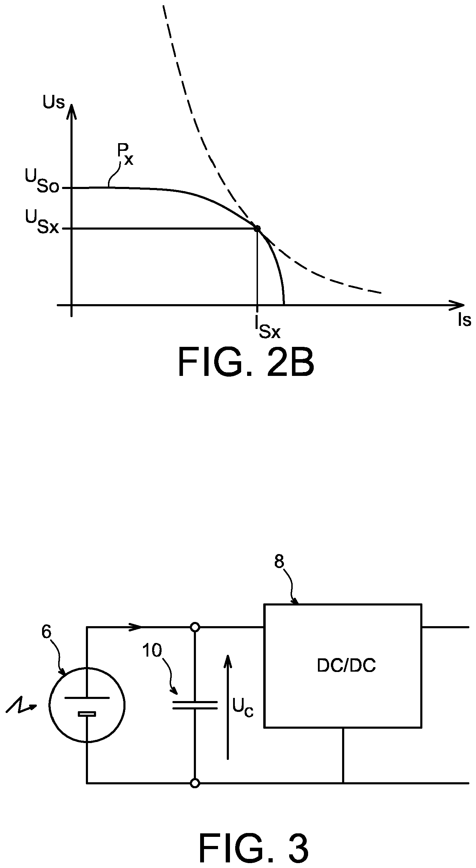

Pour une puissance optique d'entrée $P_x$ donnée il existe un point de fonctionnement pour lequel le rendement est maximum. Sur la figure 2B, ce point correspond respectivement à la tension de sortie $U_{sx}$ et au courant de sortie $I_{sx}$.

Un premier problème est la durée de vie du laser, que l'on cherche à maintenir la plus élevée possible.

On cherche également à optimiser la durée de vie du CPV 6, et en particulier à minimiser son échauffement, du à l'écart entre la puissance optique reçue et la puissance électrique qu'il délivre.

La figure 3 représente schématiquement le montage d'un CPV 6 dans un circuit dans lequel est monté un convertisseur d'alimentation continu/continu 8.

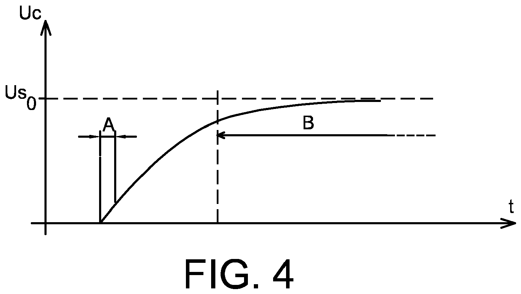

Un condensateur 10, de capacité C, est monté aux bornes du CPV 6 . Pour illustrer le problème à résoudre, considérons le cas où le CPV 6 reçoit une puissance optique Px constante très supérieure à la puissance électrique délivrée à la charge représentée par le convertisseur 8. Lors de la mise en fonctionnement du système, la charge du condensateur 10 évolue en fonction du temps comme indiqué en figure 4, pour atteindre une valeur proche de $U_{s0}$.

Le rendement dans la zone A (début de la courbe de montée de la tension) est proche de zéro, car la tension délivrée est très faible. De façon similaire, le rendement dans la zone B (zone asymptotique où la tension est proche de $U_{s0}$), est proche de zéro car le courant délivré est très faible.

Dans les deux cas, l'essentiel de la puissance optique d'entrée est convertie en chaleur.

Il en résulte une élévation de température du CPV 6.

De plus, si la capacité du condensateur 10 est importante, ce qui est souvent le cas dans les systèmes opto-alimentés, son temps de charge va être beaucoup plus long que si le CPV 6 fonctionnait à rendement maximum pendant cette phase de chargement.

Enfin, ce type de fonctionnement conduit à faire fonctionner la source laser 2 à un niveau de puissance inutilement élevé, affectant par là sa durée de vie.

Pour palier à ces inconvénients, on cherche à réguler le système pour que le point de fonctionnement du CPV 6 soit au plus proche de son point de rendement maximum.

Le document US 2009/16715 décrit un système de transmission de puissance par fibre optique.

**EXPOSÉ DE L'INVENTION**

A cette fin, l'invention propose un dispositif de régulation de l'alimentation un convertisseur photovoltaïque, selon la revendication 1.

Des moyens peuvent en outre être prévus pour mesurer une tension de sortie, ou en sortie, du convertisseur et pour produire un signal de régulation de la source laser.

On peut réguler l'impédance d'entrée dudit convertisseur en fonction de la tension de fonctionnement du convertisseur photovoltaïque et de sa tension à vide.

Les moyens pour réguler l'impédance d'entrée du convertisseur peuvent comporter des moyens pour mesurer une tension de fonctionnement du convertisseur photovoltaïque et/ou des moyens pour mesurer une tension qui dépend de la tension à vide du convertisseur photovoltaïque.

Des moyens de commutation peuvent être prévus pour connecter et déconnecter les moyens pour mesurer ladite tension de fonctionnement du convertisseur photovoltaïque.

Selon un mode de réalisation, des moyens permettent de comparer une tension qui dépend de la tension à vide du convertisseur photovoltaïque avec ladite tension de fonctionnement du convertisseur photovoltaïque.

Des moyens peuvent être prévus pour réaliser un ajustement itératif du point de fonctionnement du convertisseur et de la régulation de la source laser.

Par exemple, on peut ajuster une tension de manière itérative en vue de minimiser le *courant des moyens d'alimentation du laser.* Des moyens peuvent être prévus pour ajouter à la tension, qui dépend de la tension à vide du convertisseur photovoltaïque, une tension que l'on ajuste itérativement jusqu'à obtention d'un point de rendement optimal.

Selon un mode de réalisation, les moyens pour produire un signal de régulation de la source laser peuvent comporter des moyens pour comparer une tension de sortie du convertisseur de tension à au moins une valeur seuil, éventuellement à deux valeurs seuil, et pour produire un signal de régulation, par exemple un signal en impulsions, de la source laser en fonction du résultat de la comparaison.

De préférence, on met en œuvre :

- un premier type de signal de régulation, par exemple des impulsions d'un premier type, ou à une première fréquence, lorsque la tension de sortie du convertisseur de tension est supérieure à une première valeur seuil,
- et/ou un deuxième type de signal de régulation, par exemple des impulsions d'un deuxième type, ou à une deuxième fréquence, lorsque la tension de sortie du convertisseur de tension est inférieure à une deuxième valeur seuil.

Le signal de régulation peut réduire ou ramener à zéro la puissance émise par le laser, lorsque la tension de sortie du convertisseur de tension est supérieure à une valeur seuil ; il peut accroître ou augmenter la puissance émise par le laser, lorsque la tension de sortie du convertisseur de tension est inférieure à une valeur seuil.

De préférence, les moyens pour produire un signal de régulation de la source laser peuvent comporter des moyens pour comparer une tension de sortie du convertisseur continu-continu à une valeur de seuil d'alarme, et pour produire un message d'alarme si ce seuil d'alarme est franchi.

Le convertisseur, qui peut être de type continu-continu, peut par exemple être de type tension-tension ou courant-tension ou tension-courant.

Un tel dispositif peut en outre comporter des moyens de commutation pour déconnecter ledit convertisseur continu-continu afin de mesurer la tension à vide du convertisseur photovoltaïque.

Des moyens de stockage d'énergie, peuvent être disposés en entrée et/ou en sortie dudit convertisseur.

Les moyens pour mesurer une tension de sortie du convertisseur peuvent mesurer une tension aux bornes desdits moyens de stockage d'énergie, disposés en sortie dudit convertisseur continu-continu.

L'invention concerne également un procédé de régulation de l'alimentation d'un convertisseur photovoltaïque, selon la revendication 15 La régulation de l'impédance d'entrée du convertisseur de tension peut comporter une étape de mesure d'une tension de fonctionnement du convertisseur photovoltaïque et/ou une étape de mesure d'une tension qui dépend de la tension à vide du convertisseur photovoltaïque.

De préférence, on régule l'impédance d'entrée du convertisseur continu-continu en fonction de la tension de fonctionnement du convertisseur photovoltaïque et de sa tension à vide.

Dans un tel procédé, la régulation du convertisseur continu-continu peut comporter une étape de mesure d'une tension de fonctionnement du convertisseur photovoltaïque.

La régulation du convertisseur continu-continu peut comporter une étape de mesure d'une tension qui dépend de la tension à vide du convertisseur photovoltaïque.

On peut également réaliser un ajustement itératif du point de fonctionnement du convertisseur et de la régulation de la source laser.

Par exemple, on peut ajuster une tension de manière itérative en vue de minimiser le courant des moyens d'alimentation du laser. On ajoute à la tension, qui dépend de la tension à vide du convertisseur photovoltaïque, une tension que l'on ajuste itérativement jusqu'à obtention d'un point de rendement optimal.

La régulation de la source laser peut comporter une étape de comparaison d'une tension de sortie du convertisseur continu-continu à au moins une valeur seuil ou à au moins 2 valeurs seuil, et la production d'un signal de régulation, par exemple un signal en impulsions, de la source laser en fonction du résultat de la comparaison.

Par exemple, on produit un premier type de signal de régulation lorsque la tension de sortie du convertisseur est supérieure à une première valeur seuil, et/ou on produit un deuxième type de signal de régulation lorsque la tension de sortie du convertisseur est inférieure à une deuxième valeur seuil.

Selon un mode de réalisation, le signal de régulation réduit ou ramène à zéro la puissance émise par le laser, lorsque la tension de sortie du convertisseur de tension est supérieure à une valeur seuil, et/ou accroît ou augmente la puissance émise par le laser, lorsque la tension de sortie du convertisseur de tension est inférieure à une valeur seuil.

Un signal de régulation peut comporter des impulsions d'un premier type, ou à une première fréquence, lorsque la tension de sortie du convertisseur de tension est supérieure à une valeur seuil, et/ou des impulsions d'un deuxième type, ou à une deuxième fréquence, lorsque la tension de sortie du convertisseur de tension est inférieure à une valeur seuil.

## BRÈVE DESCRIPTION DES DESSINS

- La figure 1 est un schéma d'une source laser qui alimente un convertisseur photovoltaïque,
- les figures 2A et 2B représentent des diagrammes U-I de convertisseurs,
- la figure 3 représente le schéma de montage d'un convertisseur CPV dans un circuit, en amont d'un convertisseur tension - tension,
- la figure 4 représente la courbe de charge du convertisseur CPV de la figure 3,
- la figure 5 représente de manière détaillée la partie d'un circuit selon l'invention qui permet de piloter la tension d'entrée d'un convertisseur tension - tension,
- la figure 6 illustre différents signaux mis en œuvre dans un procédé de régulation de l'alimentation d'un laser,
- la figure 7 représente un autre aspect d'un circuit selon l'invention,
- la figure 8 représente le schéma d'un dispositif d'asservissement d'une diode laser,
- les figures 9A - 9B représentent des schémas de signaux de régulation d'une diode laser.
- la figure 10 représente un exemple de réalisation d'un circuit en vue de l'ajustement automatique du coefficient a.

## EXPOSÉ DÉTAILLÉ DE MODES DE RÉALISATION PARTICULIERS

Partant du schéma de la figure 3, on cherche à asservir le point de fonctionnement du CPV 6 via la mise en œuvre du convertisseur 8 (ici : continu-continu), de façon préférentielle de type tension - tension. En variante, il est possible aussi d'utiliser un ou plusieurs convertisseurs de type courant-tension ou tension-courant. L'asservissement du sytème sera tel que la tension d'entrée $U_{in}$ du convertisseur 8 soit proche de la tension $U_{sx}$ correspondant au point de rendement maximum du CPV 6 (voir figure 2B).

Cette tension optimale $U_{sx}$ peut être approximée comme étant une fraction de la tension à vide $U_{s0}$, soit par exemple :

$$[1] \quad U_{in} = \alpha U_{s0}.$$

Initialement, le coefficient $\alpha$ peut présenter une valeur fixe et être calé, de façon préférentielle, entre les valeurs $0,6 < \alpha < 0,95$, par exemple encore : $\alpha \# 0,75$. $\alpha$ est une donnée qui peut être déduite des caractéristiques du CPV à partir des courbes d'iso-puissance.

Pour réaliser cette condition, on mesure $U_{s0}$, et on asservit le convertisseur 8 pour que l'égalité [1] ci dessus soit satisfaite.

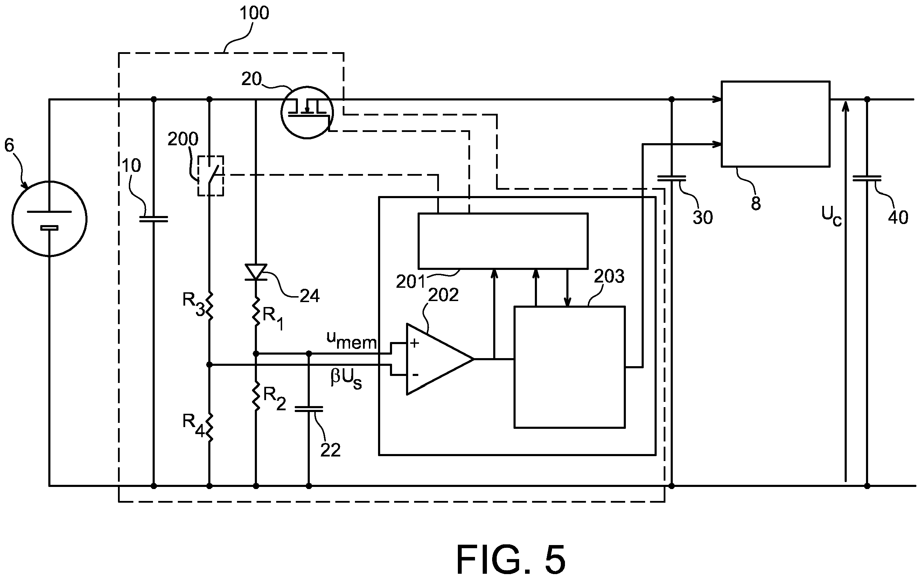

A cette fin, on peut par exemple mettre en œuvre le circuit de la figure 5, dans lequel on retrouve, notamment, les éléments de la figure 3, désignés par les mêmes références.

En outre, des moyens 20, par exemple un transistor de type en JFET ou MOSFET, ou encore un bipolaire PNP, sont disposés en entrée du convertisseur tension/tension 8. Ces moyens 20 assurent une fonction de commutateur afin de déconnecter, avantageusement de façon cyclique, la charge du convertisseur CPV 6, en vue de la mesure, de préférence régulière, de la tension à vide de ce dernier. Cette mesure permet de tenir compte de l'évolution dans le temps des différents facteurs d'influence : puissance optique incidente, température, vieillissement des composants, etc. Le pilotage de ces moyens 20 peut être effectué par un automate 201 embarqué dans le circuit alimenté par le convertisseur CPV 6. Dans un mode de réalisation préférentiel, cet automate est réalisé à partir d'un circuit électronique programmable de type FPGA (« Field Programmable Gate Array »), ou équivalent, à très faible consommation spécifique.

Afin que la déconnexion temporaire du convertisseur CPV 6, via les moyens 20, n'ait pas d'effet sur les circuits connectés en sortie du convertisseur 8, un condensateur 30, disposé en entrée de ce dernier, assure une fonction de stockage d'énergie. Une résistance 27 est connectée en série avec les moyens 20 afin de limiter l'amplitude du courant les traversant lors de leur refermeture. La présence du condensateur 30 peut en effet engendrer des courants d'appel importants.

Un premier diviseur de la tension $U_s$, produite par le CPV 6, comporte 2 résistances $R_3$, $R_4$ et permet de mesurer, en un point disposé entre les résistances $R_3$ et $R_4$, une première tension proportionnelle à $U_s$, que l'on peut noter :

$$\beta . U_s = U_s . R_4 / R_4 + R_3.$$

Ce premier diviseur permet de donner, de préférence en permanence, une image de la tension $U_s$.

Dans une variante de réalisation, le diviseur constitué par les résistances $R_3$ et $R_4$ est connecté en série avec un moyen de commutation 200, destiné à ne connecter ces résistances que pendant le temps nécessaire à la mesure de la tension Us. Le pilotage de ce moyen 200 est effectué, de préférence, par le même automate 201 embarqué assurant le pilotage des moyens 20.

Un deuxième diviseur de la tension $U_s$, produite par le CPV 6, comporte 2 résistances $R_1$, $R_2$. Il comporte en outre une diode 24 à très faible chute de tension directe, par exemple de type Shottky ; cette diode est disposée en amont des deux résistances. Ce deuxième diviseur permet de prélever ou de mesurer, en un point disposé entre les résistances $R_1$ et $R_2$, une deuxième tension, sensiblement égale à : $U_{mem} = (U_s - V_d) R_2/(R_2 + R_1)$, Vd représentant la chute de tension aux bornes de la diode 24. Cette tension $U_{mem}$ peut être mémorisée à l'aide d'un condensateur 22 connecté comme indiqué sur la figure 5, entre le point milieu des résistances $R_1$ et $R_2$ et le point commun Vref(=0)du circuit (voir figure 5). La diode 24 permet d'éviter un déchargement trop rapide de cette capacité, en raison par exemple de fluctuations de la tension $U_s$. En effet, ce deuxième diviseur est destiné à fournir une image stable de la dernière mesure de la tension à vide. La tension aux bornes du condensateur 22 se stabilise à une valeur égale à $(U_{s0} - V_d)$ $R_2/(R_2 + R_1)$, c'est-à-dire à une image de la tension à vide du convertisseur photovoltaïque 6.

Le convertisseur 8 est, de manière préférentielle, un convertisseur à découpage, dont la tension de sortie peut être modifiée en changeant soit sa fréquence de commutation interne, soit son rapport cyclique.

On le pilote, par exemple au moyen d'un régulateur 203, de telle façon que les tensions $U_{mem}$ et $\beta.U_s$ soient égales. Cette égalité peut être contrôlée, de préférence en permanence, au moyen, par exemple, d'un comparateur de tension 202.

C'est l'asservissement du convertisseur 8 qui permet d'égaler ces tensions :

$$\beta.U_s = U_{mem},$$

d'où :

$$U_s \ R_4/(R_4 + R_3) = (U_{so} - V_d) \ R_2/(R_1 + R_2).$$

Soit, encore :

$$U_s = (U_{so} - V_d).R_2/(R_1 + R_2).(R_3 + R_4)/R_4.$$

Ou encore :

$$U_s = U_{so}(1 - V_d/U_{so}).R_2/(R_1 + R_2).(R_3 + R_4)/R_4.$$

On note que l'on cherche à avoir, comme expliqué ci-dessus, un point de fonctionnement, tel que :

$$U_s = \alpha U_{so}.$$

D'où la relation entre les résistances :

$$(1 - V_d/U_{so}).R_2/(R_1 + R_2).(R_3 + R_4)/R_4 = \alpha.$$

Cette première technique est simple à mettre en œuvre et permet une faible consommation.

En variante, on peut mémoriser, par exemple dans un FPGA, qui de façon préférentielle est la même que celle utilisée dans l'automate 201, une table donnant le point de fonctionnement, c'est-à-dire $\alpha$ en fonction de $U_{s0}$. Cette deuxième technique est plus précise, mais de mise en oeuvre plus complexe.

En variante, les mesures de $U_s$ et $U_{so}$ peuvent être effectuées par des échantillonneurs-bloqueurs.

On présente plus loin une autre méthode, qui permet un ajustement itératif de la valeur du coefficient a, servant à déterminer le point de rendement optimum, indépendamment de la connaissance à priori de la caractéristique du CPV.

Dans tous les cas, y compris celui présenté plus loin avec ajustement itératif de la valeur du coefficient a, on ramène le fonctionnement du convertisseur photovoltaïque 6 dans une zone de la figure 4 dans laquelle le rendement est nettement meilleur que dans les zones A et B (dans lesquelles, rappelons-le, il est sensiblement voisin de zéro).

Cette régulation est obtenue en agissant sur l'impédance d'entrée du convertisseur 8.

Mais, quelle que soit la technique retenue, elle ne permet pas de maîtriser la tension de sortie $U_c$ du module 8 de conversion.

En effet, si la puissance absorbée par la charge connectée en sortie du convertisseur 8 est trop faible devant la puissance optique incidente sur le CPV 6, compte tenu de son rendement, la tension de sortie du convertisseur 8 va croitre sans autre limitation que la destruction des composants impliqués.

Un condensateur 40 disposé en sortie du convertisseur 8 va, à cet égard, assurer un double rôle de sécurité et de stockage.

En effet, plus forte sera la capacité de ce condensateur 40, plus lentes seront, toutes choses égales par ailleurs, les variations de tension $U_c$ en sortie du convertisseur 8.

De façon symétrique, si la puissance absorbée par la charge connectée en sortie du convertisseur 8 est trop grande devant la puissance optique incidente sur le CPV 6, compte tenu de son rendement, la tension $U_c$ de sortie du convertisseur 8 va décroître jusqu'à s'annuler. Là aussi, Le condensateur 40 va jouer un rôle en fournissant une réserve temporaire d'énergie, et en ralentissant les vitesses de variation de la tension $U_c$ de sortie du convertisseur 8.

Ces fluctuations de la tension $U_c$ sont le reflet de l'inadéquation entre la puissance optique délivrée par le laser et la puissance nécessaire au fonctionnement de l'équipement auquel il sert de source d'alimentation en énergie. Lorsque ces deux puissances sont en adéquation, le condensateur 40 n'a plus besoin ni de fournir de l'énergie, ni d'en stocker. La tension $U_c$ reste constante.

On peut donc mettre en œuvre des moyens complémentaires de régulation de l'alimentation de la cellule photovoltaïque 6, de manière à réguler la tension $U_c$.

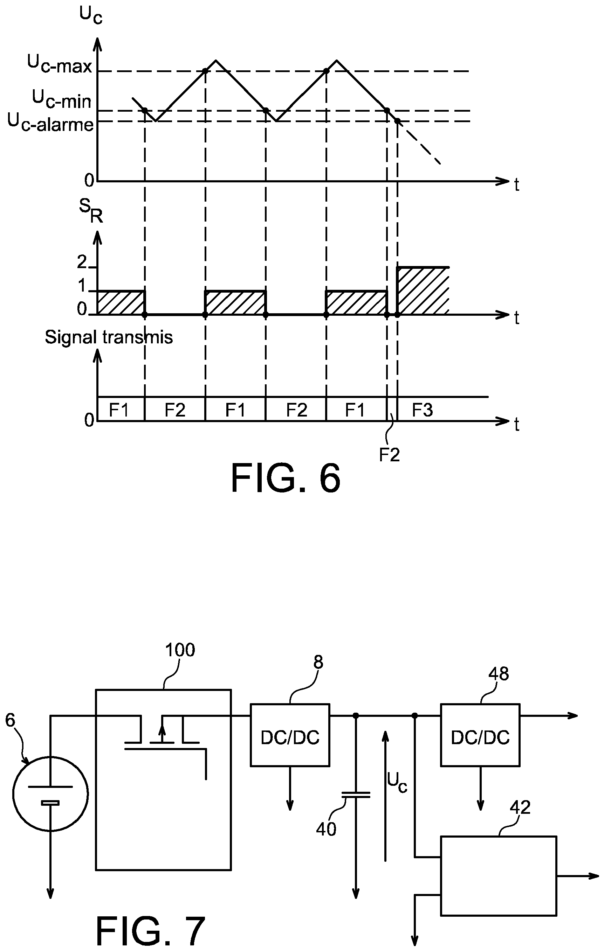

Plus particulièrement, on va mettre en œuvre des moyens de régulation de l'alimentation du laser 2. La figure 6 illustre des exemples de différents signaux, en fonction du temps t, qui peuvent être mis en œuvre dans cette régulation.

À cette fin, la tension de sortie $U_c$ du module 8, et qui est aussi la tension aux bornes du condensateur 40, va être mesurée. Lorsque la régulation de l'alimentation du laser 2 sera opérationnelle, la tension de sortie $U_c$ du module 8 restera comprise entre deux limites $U_{c\_max}$ et $U_{c\_min}$.

Si une défaillance survient dans la boucle de régulation, comme par exemple une défaillance du laser 2, qui ne transmettrait plus d'énergie au convertisseur CPV 6, la tension $U_c$ peut alors décroitre en dessous de la valeur limite $U_{c\_min}$ et même franchir un seuil d'alarme $U_{c\_alarme}$.

Ce niveau de tension $U_{c\_alarme}$ est déterminé de façon telle que l'énergie stockée dans le condensateur 40, associée aux caractéristiques du convertisseur 48 auquel il est connecté, permette au système de fonctionner encore pendant une durée suffisante pour pouvoir transmettre un message d'alarme. Un tel message d'alarme est alors transmis.

On se réfère à la figure 7, dans laquelle des références identiques à celles de la figure précédente représentent les mêmes éléments, y compris l'ensemble des moyens 100 qui ont été décrits en détail ci-dessus. La référence 42 désigne un ensemble de moyens qui vont permettre de mesurer la tension $U_c$ aux bornes du condensateur de stockage 40.

C'est, par exemple, un module de télémesure de cette tension.

Ces moyens 42 vont également permettre de réaliser l'élaboration d'un signal de régulation $S_R$, à partir des valeurs mesurées de la tension $U_c$.

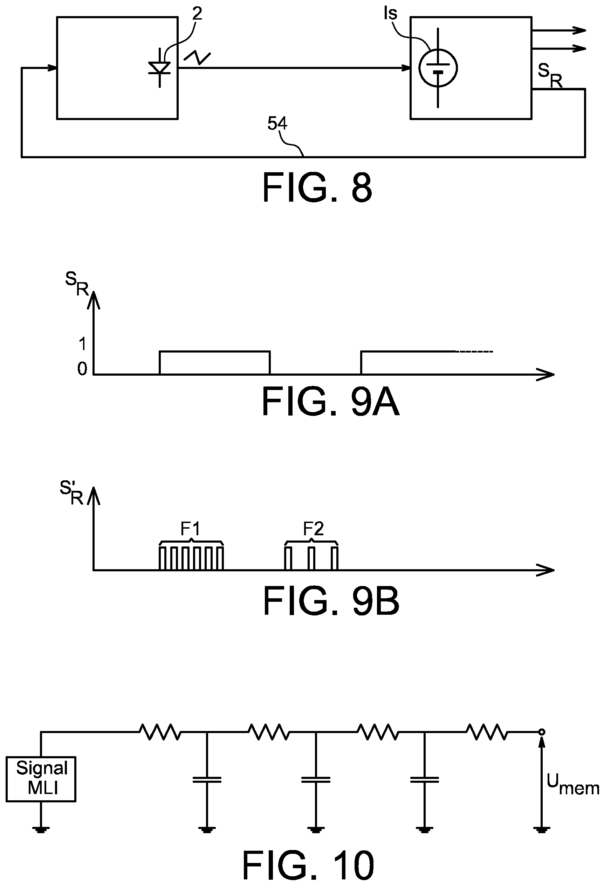

Ce signal de régulation peut être transmis aux moyens d'alimentation du laser 2 via une fibre optique 54 (figure 8).

Pour élaborer le signal de régulation, on peut définir une valeur haute de seuil, $S_h$, et une valeur basse de seuil, $S_b$, de sorte que :

Si $U_c > U_{c\_max}$ : $S_R = 1$

Si $U_c < U_{c\_min}$ : $S_R = 0$.

On peut également définir un seuil $U_{c\_alarme}$, tel que, si $U_c < U_{c\_alarme}$ : $S_R = 2$.

Un signal de régulation est donc élaboré dès lors que la tension $U_c$ est supérieure à un seuil haut ou inférieure à un seuil bas. Il convient de souligner que ces deux seuils sont équivalents à un hystérésis associé à une régulation à un seul seuil. En variante, on peut donc prévoir des moyens de régulation à un seul seuil, avec hystérésis.

Par ailleurs, on peut déterminer une durée $T_{délai}$ dont la valeur est déterminée à partir des constantes de temps du système, et en particulier de la capacité du condensateur 40.

Le module de pilotage du laser 2 peut être contrôlé comme suit :

1. Selon une première possibilité :

Si $S_R = 1$ : on éteint le laser ;
Si $S_R = 0$ : on active le laser.

En outre, si $S_R$=2, il est possible de déclencher une stratégie de maintenance.

Autrement dit, le laser est piloté pour émettre un rayonnement lorsque $S_R$=0, ou encore lorsque la tension fournie par le convertisseur DC/DC 8 est inférieure à une valeur seuil.

2. Selon une seconde possibilité :

Si $S_R$=1 (la tension $U_c$ est supérieure à une valeur seuil) : on réduit alors la puissance du laser d'un facteur donné, par exemple, de 10%. Puis, si, au delà d'une durée égale à $T_{délai}$, $S_R$ est toujours égal à 1, on peut réduire de nouveau la puissance du laser du même facteur que précédemment. Cette réduction peut être répétitive tant que $S_R$=1, pendant des durées multiples de $T_{délai}$.

Si $S_R$=0 (la tension $U_c$ est inférieure à une valeur seuil) : on augmente la puissance laser d'un facteur donné, par exemple encore de 10 %. Puis, si, au-delà d'une durée égale à $T_{délai}$, $S_R$ est toujours égal à 0, on peut augmenter de nouveau la puissance du laser du même facteur que précédemment. Cette augmentation peut être répétitive tant que $S_R$=0 pendant des durées multiples de $T_{délai}$.

Si $S_R$=2 : il est possible de déclencher une stratégie de maintenance.

En l'absence de défaillance, le laser va, alors, progressivement, se stabiliser à une puissance proche de la puissance optimale.

Cette seconde possibilité est optimale, tant pour le laser 2 que pour le CPV 6, tout en étant sûre. Elle est donc considérée comme préférentielle.

Il est souhaitable, pour des raisons de sureté de fonctionnement qui apparaîtront ci-dessous, de ne pas transmettre en l'état le signal $S_R$ produit de la manière expliquée ci-dessus, mais de le transmettre via la modulation d'un signal porteur.

En effet, le laser 2 et les équipements associés au convertisseur CPV 6 peuvent être relativement éloignés.

Les liaisons à fibre optique assurant respectivement la transmission de l'énergie du laser 2 vers le CPV 6 et l'information pour la régulation de l'équipement alimenté par le CPV6 vers le laser 2 peuvent être interrompues accidentellement pour de multiples raisons (rupture de connexions, défaillance d'équipements, etc.).

Afin de palier à ce problème, selon une technique, on transmet les informations via une modulation de fréquence. Même en l'absence de signal à transmettre, le récepteur détecte toujours une activité sur la fibre optique. L'absence d'activité sur la fibre est alors la signature d'une défaillance de la liaison.

Les moyens 42 vont donc transmettre un signal $S'_R$ à partir du signal $S_R$.

On a représenté, en figure 9A, le signal $S_R$ tel qu'élaboré ci-dessus.

On a représenté, en figure 9B, un signal $S'_R$ obtenu à partir du signal $S_R$. Selon un exemple, ce signal peut comporter :

- une suite d'impulsions à une première fréquence $F_1$, lorsque $S_R$ = 1. La détection de cette fréquence $F_1$ par les équipements de réception sera interprétée comme le besoin de réduire la puissance du laser.
- une suite d'impulsions à une deuxième fréquence $F_2$, lorsque $S_R$ = 0.

Eventuellement, ce signal comporte une suite d'impulsions, à une troisième fréquence $F_3$, lorsque $S_R$ = 2.

En variante, on peut utiliser tout autre protocole pour la transmission de l'information $S_R$ pour assurer la régulation de la puissance du laser 2.

Une perte d'activité du laser, témoignant donc d'un problème de fonctionnement de celui-ci, est donc immédiatement détectée, et différentiée d'une rupture de transmission d'information, laquelle se traduit par l'absence de signal sur la fibre optique.

Au final, la variation d'énergie $\Delta W$ dans le condensateur 40 est donnée par :

$$\Delta W \; = \; 1/2C\,(U_f - U_i)\,.$$

Les tensions $U_f$ et $U_i$ étant respectivement légèrement supérieure à $U_{c\_max}$ et légèrement inférieure à $U_{c\_min}$, compte tenu du retard entre le franchissement des seuils et leurs effets sur la régulation.

La puissance électrique fournie utile est égale à : $\eta P_o$, où $P_o$ est la puissance optique fournie.

L'énergie fournie vaut donc :

$$\eta P_o\,(t_f - t_i) = \; 1/2 \; C\,(U_f{}^2 - U_i{}^2)\,.$$

Et le temps de charge vaut :

$$t_f - t_i = 1/2C(U_f^2 - U_i^2)/\eta P_o$$

On charge donc le condensateur de manière très rapide, tout en laissant chauffer le moins possible le CPV 6.

On présente maintenant le procédé qui permet un ajustement itératif de la valeur du coefficient a, servant à déterminer le point de rendement optimum, indépendamment de la connaissance à priori de la caractéristique du CPV.

Ce procédé met au moins en œuvre un dispositif tel que le dispositif 100 décrit ci-dessus en lien avec la figure 5, le module 8 et les moyens 42 qui permettent d'élaborer un signal de régulation des moyens d'alimentation du laser.

A cette fin, on dispose, à l'entrée du comparateur de tension 202, des moyens qui vont permettre de générer une tension additionnelle à $U_{mem}$, que l'on ajuste progressivement et de manière itérative, jusqu'à minimiser *le courant des moyens d'alimentation de la source laser.*

Cette technique itérative permet d'améliorer encore le rendement du convertisseur CPV 6.

Des exemples d'étapes de cette technique sont les suivantes :

1. Mesure de la tension en sortie du convertisseur photovoltaïque CPV6, ce qui provoque le déclenchement d'une régulation du courant des moyens d'alimentation du laser et ce qui détermine une caractéristique (Us-Is) du convertisseur CPV6 ;

2. Comparaison de la tension en charge avec la tension à vide, et respect du critère : Us = $\alpha$.Us0 (a fixe), ce qui permet de caler un premier point de rendement optimal sur la caractéristique précédente Us-Is du convertisseur CPV6, comme déjà décrit ci-dessus ;

3. ajout d'une tension additionnelle à l'entrée du comparateur de tension 202, ce qui provoque un nouveau réglage du courant laser, selon l'étape 1, et une nouvelle recherche du point de rendement optimal selon l'étape 2. Une nouvelle valeur de tension additionnelle à l'entrée du comparateur de tension 202 est appliquée, afin de répéter encore les étapes 1 et 2 ci-dessus, et ainsi de suite, jusqu'à finalement minimiser la production du niveau de courant des moyens d'alimentation du laser.

Initialement, on a pu régler le courant des moyens d'alimentation du laser à une valeur qui permette un fonctionnement normal de celui-ci, même si pas optimisé. Ceci détermine une caractéristique (Us-Is) du convertisseur CPV6, et l'étape 2 peut être mise en œuvre. L'itération est ainsi amorcée.

Un exemple de réalisation d'un circuit pour l'ajustement automatique du coefficient $\alpha$ est présenté en figure 10 ; il permet de superposer, à la tension $U_{mem}$, un signal issu d'un circuit de type « pompe de charge R-C », excité par un signal de modulation de largeurs d'impulsion « MLI » ; différentes valeurs du rapport cyclique permettent d'ajuster progressivement le niveau de tension qui est directement rajouté au signal $U_{mem}$. Le pilotage de ce moyen est effectué, de préférence, par le même automate 201 embarqué assurant le pilotage des moyens 20. De manière générale, tout autre exemple de réalisation qui consisterait à superposer des niveaux préenregistrés de tension à la tension Umem serait également applicable.

**Revendications**

**1.** Dispositif de régulation de l'alimentation d'un convertisseur photovoltaïque (6), comportant :

- une source laser (2),
- un convertisseur photovoltaïque (6), qui alimente un convertisseur continu-continu (8),
- une fibre optique pour transmettre l'énergie de la source laser (2) au convertisseur photovoltaïque (6) ;
- des moyens (100, 203) pour réguler ledit convertisseur continu-continu (8) en fonction de la tension de fonctionnement ($U_s$) du convertisseur photovoltaïque (6) et de sa tension à vide ($U_{s0}$),
- des moyens (42) pour mesurer une tension de sortie du convertisseur continu-continu (8) et pour produire un signal de régulation ($SR'_R$) de la source laser.

**2.** Dispositif selon la revendication 1, dans lequel on régule l'impédance d'entrée dudit convertisseur continu-continu (8) en fonction de la tension de fonctionnement ($U_s$) du convertisseur photovoltaïque (6) et de sa tension à vide ($U_{s0}$).

**3.** Dispositif selon l'une des revendications 1 ou 2, les moyens (100) pour réguler le convertisseur continu-continu (8) comportant des moyens ($R_3$-$R_4$) pour mesurer une tension de fonctionnement du convertisseur photovoltaïque (6).

**4.** Dispositif selon la revendication 3, comportant en outre des moyens de commutation (200) pour connecter et déconnecter les moyens ($R_3$-$R_4$) pour mesurer ladite tension de fonctionnement du convertisseur photovoltaïque (6).

**5.** Dispositif selon l'une des revendications 1 à 4, les moyens (100, 203) pour réguler le convertisseur continu-continu (8) comportant des moyens ($R_1$-$R_2$, 22) pour mesurer une tension qui dépend de la tension à vide du convertisseur photovoltaïque (6).

**6.** Dispositif selon l'une des revendications 1 à 5, comportant en outre des moyens (202) pour comparer une tension qui dépend de la tension à vide du convertisseur photovoltaïque (6) avec ladite tension de fonctionnement du convertisseur photovoltaïque (6) et/ou des moyens pour réaliser un ajustement itératif du point de fonctionnement du convertisseur continu-continu (8) et de la régulation de la source laser, et éventuellement, des moyens pour ajuster une tension de manière itérative afin de minimiser le courant de moyens d'alimentation du laser.

**7.** Dispositif selon la revendication 6, comportant en outre des moyens pour ajouter à la tension, qui dépend de la tension à vide du convertisseur photovoltaïque, une tension que l'on ajuste itérativement jusqu'à obtention d'un point de rendement optimal.

**8.** Dispositif selon l'une des revendications précédentes, les moyens (42) pour produire un signal de régulation de la source laser comportant des moyens pour comparer une tension de sortie du convertisseur continu-continu (8) à au moins une ou deux valeur (s) seuil (s) ($U_{cmin}$, $U_{cmax}$), et pour produire un signal de régulation de la source laser en fonction du résultat de la comparaison.

**9.** Dispositif selon la revendication précédente, dans lequel on met en oeuvre un premier type de signal de régulation lorsque la tension de sortie du convertisseur continu-continu est supérieure à une première valeur seuil ($U_{cmax}$), et/ou on met en oeuvre un deuxième type de signal de régulation lorsque la tension de sortie du convertisseur continu-continu est inférieure à une deuxième valeur seuil ($U_{c\,min}$).

**10.** Dispositif selon l'une des revendications 8 ou 9, le signal de régulation :

- réduisant ou ramenant à zéro la puissance émise par le laser, lorsque la tension de sortie du convertisseur continu-continu est supérieure à une valeur seuil, et/ou accroissant ou augmentant la puissance émise par le laser, lorsque la tension de sortie du convertisseur continu-continu est inférieure à une valeur seuil ;
- et/ou étant un signal en impulsions (I1, I2), par exemple le signal de régulation comportant des impulsions d'un premier type, ou à une première fréquence, lorsque la tension de sortie du convertisseur continu-continu est supérieure à une valeur seuil, et/ou des impulsions d'un deuxième type, ou à une deuxième fréquence, lorsque la tension de sortie du convertisseur continu-continu est inférieure à une valeur seuil.

**11.** Dispositif selon l'une des revendications 8 à 10, les moyens (42) pour produire un signal de régulation de la source laser comportant des moyens pour comparer une tension de sortie du convertisseur continu-continu (8) à une valeur de seuil d'alarme ($U_{calarme}$), et pour produire un message d'alarme si ce seuil d'alarme est franchi.

**12.** Dispositif selon l'une des revendications 1 à 11, le convertisseur continu-continu étant de type tension-tension ou courant-tension ou tension-courant.

**13.** Dispositif selon l'une des revendications 1 à 12, comportant en outre des moyens de commutation (20) pour déconnecter ledit convertisseur continu-continu (8) afin de mesurer la tension à vide du convertisseur photovoltaïque (6).

**14.** Dispositif selon l'une des revendications 1 à 13, comportant en outre des moyens (30) de stockage d'énergie, disposés en entrée dudit convertisseur continu-continu (8) et/ou des moyens (40) de stockage d'énergie, disposés en sortie dudit convertisseur continu-continu (8), les moyens (42) pour mesurer une tension de sortie du convertisseur continu-continu (8) pouvant éventuellement mesurer une tension aux bornes desdits moyens (40) de stockage d'énergie, disposés en sortie dudit convertisseur continu-continu (8) .

**15.** Procédé de régulation de l'alimentation d'un convertisseur photovoltaïque (6), qui alimente un convertisseur continu-continu (8), comportant les étapes suivantes :

- émettre des impulsions de rayonnement par une source laser (2) transmises en direction du convertisseur photovoltaïque (6) à l'aide d'une fibre optique,
- réguler ledit convertisseur continu-continu (8) en fonction de la tension de fonctionnement ($U_s$) du convertisseur photovoltaïque (6) et de sa tension à vide ($U_{s0}$),
- mesurer une tension de sortie ($U_c$) du convertisseur continu-continu (8) et réguler la source laser en fonction de cette tension de sortie.

**Patentansprüche**

1. Vorrichtung zur Regelung der Versorgung eines Photovoltaik-Wandlers (6), umfassend:

   - eine Laserquelle (2),
   - einen Photovoltaik-Wandler (6), der einen Gleichstrom-Gleichstrom-Wandler (8) versorgt,
   - eine optische Faser, um die Energie von der Laserquelle (2) zum Photovoltaik-Wandler (6) zu übertragen;
   - Mittel (100, 203), um den Gleichstrom-Gleichstrom-Wandler (8) in Abhängigkeit von der Betriebsspannung ($U_s$) des Photovoltaik-Wandlers (6) und von dessen Leerlaufspannung ($U_{s0}$) zu regeln,
   - Mittel (42), um eine Ausgangsspannung des Gleichstrom-Gleichstrom-Wandlers (8) zu messen, und um ein Signal zur Regelung ($SR'_R$) der Laserquelle zu erzeugen.

2. Vorrichtung nach Anspruch 1, wobei die Eingangsimpedanz des Gleichstrom-Gleichstrom-Wandlers (8) in Abhängigkeit von der Betriebsspannung ($U_s$) des Photovoltaik-Wandlers (6) und von dessen Leerlaufspannung ($U_{s0}$) geregelt wird.

3. Vorrichtung nach einem der Ansprüche 1 oder 2, wobei die Mittel (100) zum Regeln des Gleichstrom-Gleichstrom-Wandlers (8) Mittel ($R_3$-$R_4$) zum Messen einer Betriebsspannung des Photovoltaik-Wandlers (6) umfassen.

4. Vorrichtung nach Anspruch 3, weiter Schaltmittel (200) umfassend, um die Mittel ($R_3$-$R_4$) zum Messen der Betriebsspannung des Photovoltaik-Wandlers (6) zu verbinden und zu trennen.

5. Vorrichtung nach einem der Ansprüche 1 bis 4, wobei die Mittel (100, 203) zum Regeln des Gleichstrom-Gleichstrom-Wandlers (8) Mittel ($R_1$-$R_2$, 22) zum Messen einer Spannung umfassen, die von der Leerlaufspannung des Photovoltaik-Wandlers (6) abhängig ist.

6. Vorrichtung nach einem der Ansprüche 1 bis 5, weiter Mittel (202) zum Vergleichen einer Spannung, die von der Leerlaufspannung des Photovoltaik-Wandlers (6) abhängig ist, mit der Betriebsspannung des Photovoltaik-Wandlers (6), und/oder Mittel zum Ausführen einer iterativen Anpassung des Betriebspunkts des Gleichstrom-Gleichstrom-Wandlers (8) und der Regelung der Laserquelle, und gegebenenfalls Mittel zum iterativen Anpassen einer Spannung umfassend, um den Strom von Versorgungsmitteln des Lasers zu minimieren.

7. Vorrichtung nach Anspruch 6, weiter Mittel umfassend zum Hinzufügen einer Spannung zu der von der Leerlaufspannung des Photovoltaik-Wandlers abhängigen Spannung, welche bis zum Erhalt eines Bestpunkts iterativ angepasst wird.

8. Vorrichtung nach einem der vorstehenden Ansprüche, wobei die Mittel (42) zum Erzeugen eines Regelsignals der Laserquelle Mittel zum Vergleichen einer Ausgangsspannung des Gleichstrom-Gleichstrom-Wandlers (8) mit mindestens einem oder zwei Schwellenwert(en) ($U_{cmin}$, $U_{cmax}$) und zum Erzeugen eines Regelsignals der Laserquelle in Abhängigkeit vom Ergebnis des Vergleichs umfassen.

9. Vorrichtung nach dem vorstehenden Anspruch, wobei ein erster Typ von Regelsignal eingesetzt wird, wenn die Ausgangsspannung des Gleichstrom-Gleichstrom-Wandlers größer ist als ein erster Schwellenwert ($U_{cmax}$), und/oder ein zweiter Typ von Regelsignal eingesetzt wird, wenn die Ausgangsspannung des Gleichstrom-Gleichstrom-Wandlers kleiner ist als ein zweiter Schwellenwert ($U_{cmin}$).

10. Vorrichtung nach einem der Ansprüche 8 oder 9, wobei das Regelsignal:

    - die vom Laser abgebebene Leistung reduziert oder auf Null senkt, wenn die Ausgangsspannung des Gleichstrom-Gleichstrom-Wandlers größer ist als ein Schwellenwert, und/oder die vom Laser abgegebene Leistung erhöht oder steigert, wenn die Ausgangsspannung des Gleichstrom-Gleichstrom-Wandlers kleiner ist als ein Schwellenwert;
- und/oder ein Impulssignal (I1, I2) ist, wobei das Regelsignal zum Beispiel Impulse eines ersten Typs oder mit einer ersten Frequenz umfasst, wenn die Ausgangsspannung des Gleichstrom-Gleichstrom-Wandlers größer ist als ein Schwellenwert, und/oder Impulse eines zweiten Typs oder mit einer zweiten Frequenz, wenn die Ausgangsspannung des Gleichstrom-Gleichstrom-Wandlers kleiner ist als ein Schwellenwert.

11. Vorrichtung nach einem der Ansprüche 8 bis 10, wobei die Mittel (42) zum Erzeugen eines Regelsignals der Laserquelle Mittel zum Vergleichen einer Ausgangsspannung des Gleichstrom-Gleichstrom-Wandlers (8) mit einem Alarmschwellenwert ($U_{cAlarm}$), und zum Erzeugen einer Alarmmeldung umfassen, wenn diese Alarmschwelle überschritten wird.

12. Vorrichtung nach einem der Ansprüche 1 bis 11, wobei der Gleichstrom-Gleichstrom-Wandler vom Typ Spannung-Spannung oder Strom-Spannung oder Spannung-Strom ist.

13. Vorrichtung nach einem der Ansprüche 1 bis 12, weiter Schaltmittel (20) zum Trennen des Gleichstrom-Gleichstrom-Wandlers (8) umfassend, um die Leerlaufspannung des Photovoltaik-Wandlers (6) zu messen.

14. Vorrichtung nach einem der Ansprüche 1 bis 13, weiter Energiespeichermittel (30) umfassend, die am Eingang des Gleichstrom-Gleichstrom-Wandlers (8) angeordnet sind, und/oder Energiespeichermittel (40), die am Ausgang des Gleichstrom-Gleichstrom-Wandlers (8) angeordnet sind, wobei die Mittel (42) zum Messen einer Ausgangsspannung des Gleichstrom-Gleichstrom-Wandlers (8) gegebenenfalls eine Spannung an den Anschlüssen der am Ausgang des Gleichstrom-Gleichstrom-Wandlers (8) angeordneten Energiespeichermittel (40) messen können.

15. Verfahren zur Regelung der Versorgung eines Photovoltaik-Wandlers (6), der einen Gleichstrom-Gleichstrom-Wandler (8) versorgt, das die folgenden Schritte umfasst:

- Abgeben von Strahlungsimpulsen durch eine Laserquelle (2), die mithilfe einer optischen Faser in Richtung des Photovoltaik-Wandlers (6) übertragen werden,
- Regeln des Gleichstrom-Gleichstrom-Wandlers (8) in Abhängigkeit von der Betriebsspannung ($U_s$) des Photovoltaik-Wandlers (6) und von dessen Leerlaufspannung ($U_{s0}$),
- Messen einer Ausgangsspannung ($U_c$) des Gleichstrom-Gleichstrom-Wandlers (8) und Regeln der Laserquelle in Abhängigkeit von dieser Ausgangsspannung.

**Claims**

1. Device for regulating the supply of a photovoltaic converter (6), comprising:

- a laser source (2),
- a photovoltaic converter (6), which supplies a DC to DC converter (8),
- an optical fibre to transmit energy from the laser source (2) to the photovoltaic converter (6);
- means (100, 203) for regulating said DC to DC converter (8) according to the operating voltage ($U_s$) of the photovoltaic converter (6) and of the open circuit voltage ($U_{S0}$) thereof,
- means (42) for measuring an output voltage of the DC to DC converter (8) and to produce a regulation signal ($SR'_R$) of the laser source.

2. Device according to claim 1, wherein the input impedance of said DC to DC converter (8) is regulated according to the operating voltage ($U_s$) of the photovoltaic converter (6) and of the open circuit voltage ($U_{S0}$) thereof.

3. Device according to any one of claims 1 to 2, the means (100) for regulating the DC to DC converter (8) comprising means ($R_3$-$R_4$) for measuring an operating voltage of the photovoltaic converter (6).

4. Device according to claim 3, further comprising switching means (200) for connecting and disconnecting the means ($R_3$-$R_4$) for measuring said operating voltage of the photovoltaic converter (6).

5. Device according to any one of claims 1 to 4, the means (100, 203) for regulating the DC to DC converter (8) comprising means ($R_1$-$R_2$, 22) for measuring a voltage which depends on the open circuit voltage of the photovoltaic converter (6).

**6.** Device according to any one of claims 1 to 5, further comprising means (202) for comparing a voltage which depends on the open circuit voltage of the photovoltaic converter (6) with said operating voltage of the photovoltaic converter (6) and/or means for achieving an iterative adjustment of the operating point of the DC to DC converter (8) and of the regulation of the laser source, and possibly, means for adjusting a voltage iteratively in order to minimise the current of the laser supply means.

**7.** Device according to claim 6, further comprising means for adding to the voltage, which depends on the open circuit voltage of the photovoltaic converter, a voltage that is adjusted iteratively until obtaining an optimal efficiency point.

**8.** Device according to any one of the preceding claims, the means (42) for producing a regulation signal of the laser source comprising means for comparing an output voltage of the DC to DC converter (8) at at least one or two threshold value(s) ($U_{cmin}$, $U_{cmax}$), and to produce a regulation signal of the laser source according to the result of the comparison.

**9.** Device according to the preceding claim, wherein a first type of regulation signal is implemented when the output voltage of the DC to DC converter is greater than a first threshold value ($U_{cmax}$), and/or a second type of regulation signal is implemented when the output voltage of the DC to DC converter is less than a second threshold value ($U_{cmin}$).

**10.** Device according to any one of claims 8 or 9, the regulation signal:

- reducing or bringing back to zero the power emitted by the laser, when the output voltage of the DC to DC converter is greater than a threshold value, and/or increasing or augmenting the power emitted by the laser, when the output voltage of the DC to DC converter is less than a threshold value;
- and/or a pulse signal (I1, I2), for example the regulation signal comprising pulses of a first type, or at a first frequency, when the output voltage of the DC to DC converter is greater than a threshold value, and/or pulses of a second type, or at a second frequency, when the output voltage of the DC to DC converter is less than a threshold value.

**11.** Device according to any one of claims 8 to 10, the means (42) for producing a regulation signal of the laser source comprising means for comparing an output voltage of the DC to DC converter (8) at an alarm threshold value ($U_{calarm}$), and for producing an alarm message if this alarm threshold is crossed.

**12.** Device according to any one of claims 1 to 11, the DC to DC converter being of the voltage-voltage or current-voltage or voltage-current type.

**13.** Device according to any one of claims 1 to 12, further comprising switching means (20) for disconnecting said DC to DC converter (8) in order to measure the open circuit voltage of the photovoltaic converter (6).

**14.** Device according to any one of claims 1 to 13, further comprising energy storage means (30), arranged at the input of said DC to DC converter (8) and/or energy storage means (40), arranged at the output of said DC to DC converter (8), the means (42) for measuring an output voltage of the DC to DC converter (8) which could possibly measure a voltage at the terminals of said energy storage means (40), arranged at the output of said DC to DC converter (8).

**15.** Method for regulating the supply of a photovoltaic converter (6), which supplies a DC to DC converter (8), comprising the following steps:

- emitting radiation pulses by a laser source (2) transmitted in the direction of the photovoltaic converter (6) using an optical fibre,
- regulating said DC to DC converter (8) according to the operating voltage ($U_s$) of the photovoltaic converter (6) and of the open circuit voltage ($U_{S0}$) thereof,
- measuring an output voltage ($U_c$) of the DC to DC converter (8) and regulating the laser source according to this output voltage.

FIG. 1

FIG. 2A

FIG. 2B

FIG. 3

FIG. 4

FIG. 5

FIG. 6

FIG. 7

FIG. 8

FIG. 9A

FIG. 9B

FIG. 10

**EP 3 033 843 B1**

## RÉFÉRENCES CITÉES DANS LA DESCRIPTION

**Documents brevets cités dans la description**

- US 200916715 B